# FASCICULE DE BREVET EUROPEEN

(11) **EP 1 932 458 B1**
(45) Date de publication et mention de la délivrance du brevet: **04.11.2009**
(21) Numéro de dépôt: 07356165.6
(22) Date de dépôt: 19.11.2007
(51) Int. Cl.: A47J 43/07, B01F 15/06

(54) **Appareil électroménager de préparation culinaire de type blender comprenant un bâton mélangeur**
Mixerähnliches elektrisches Haushaltsgerät mit Rührer
Blender-type electrical kitchen appliance comprising a stirrer

(30) Priorité: 13.12.2006 FR 0610864
(43) Date de publication de la demande: 18.06.2008
(73) Titulaire: SEB SA, 69130 Ecully (FR)
(72) Inventeur: Martin, Philippe, 53240 Andouille (FR); Feron, Stéphanie, 53440 Marcille la Ville (FR); Follezour, Anne Estelle, 53100 Chatillon S/Colmont (FR)
(74) Mandataire: Kiehl, Hubert

(56) Documents cités:
- US-A1- 3 589 834
- US-A1- 2002 080 678
- US-A1- 2005 105 386
- US-A1- 2005 185 507

## Description

La présente invention se rapporte à un appareil électroménager de préparation culinaire de type blender et se rapporte plus particulièrement à un appareil comportant un récipient fermé par un couvercle muni d'une ouverture permettant l'introduction d'un accessoire de type bâton mélangeur.

Il est connu, du document US 5 302 021, un appareil blender comportant un couvercle de fermeture muni d'une ouverture pour l'introduction d'un accessoire de type bâton mélangeur, ce dernier permettant de ramener les aliments en direction de l'outil de coupe. Un tel bâton mélangeur permet également de combattre la formation d'une poche d'air tourbillonnante au-dessus de l'outil de coupe, notamment lors du mixage d'aliments liquides.

Cependant, un tel appareil ne permet pas de refroidir ou de maintenir à basse température les ingrédients introduits dans le récipient, pour réaliser par exemple des boissons givrées.

Il est connu du document US 4 885 917, de remédier à cet inconvénient en proposant un appareil blender comportant un récipient à double paroi renfermant, entre les deux parois, un agent congelable. Un tel récipient peut être placé dans un congélateur, de manière à congeler le produit contenu dans les parois, puis être utilisé avec l'appareil blender pour effectuer une préparation nécessitant un refroidissement des ingrédients.

Cependant, un tel récipient présente l'inconvénient d'être encombrant, de sorte que l'utilisateur est souvent confronté à un problème de manque de place lorsqu'il souhaite introduire un tel récipient dans un congélateur. Un tel récipient blender présente également l'inconvénient d'être relativement complexe et coûteux à fabriquer.

Le document US 2002/0080678 décrit un appareil blender comportant un bâton mélangeur.

Aussi, un but de la présente invention est de remédier à ces inconvénients en proposant un appareil électroménager de type blender dans lequel le refroidissement ou le réchauffement de la préparation est obtenu par un moyen simple et facilement utilisable.

A cet effet, l'invention a pour objet un appareil électroménager de préparation culinaire de type blender comportant un récipient dont le fond comprend un outil de travail entraîné en rotation par un moteur, le récipient étant fermé par un couvercle comportant une ouverture permettant l'introduction d'un bâton mélangeur, caractérisé en ce que la partie du bâton mélangeur destinée à être introduite dans le récipient comporte une cavité susceptible de contenir un agent caloporteur.

Une telle caractéristique présente l'avantage de permettre facilement le refroidissement ou le maintien à basse température de la préparation présente dans le récipient.

Selon une autre caractéristique de l'appareil selon l'invention, la cavité comporte un orifice permettant le remplissage ou le vidage de la cavité.

Une telle caractéristique présente l'avantage de permettre l'introduction dans la cavité de l'agent caloporteur souhaité.

Selon une autre caractéristique de l'appareil selon l'invention, l'orifice est fermé par un élément amovible.

Selon encore une autre caractéristique du couvercle selon l'invention, l'agent caloporteur est un liquide qui est congelé en disposant le bâton mélangeur dans un congélateur, la bâton mélangeur étant ensuite introduit dans le récipient pour refroidir, par conduction thermique, la préparation contenue dans le récipient.

Selon encore une autre caractéristique de l'invention, l'agent caloporteur est un agent réfrigérant constitué par un mélange d'eau et de sel.

Selon encore une autre caractéristique de l'invention, le bâton mélangeur comporte une extrémité supérieure munie d'une poignée montée de manière amovible sur un corps creux allongé renfermant la cavité, le corps creux comportant une extrémité supérieure ouverte, définissant l'orifice de remplissage, qui est fermée par la poignée.

Selon encore une autre caractéristique de l'invention, la poignée comporte un volume libre venant au-dessus de l'orifice de remplissage de la cavité.

Une telle caractéristique présente l'avantage de définir une cavité dans la poignée dans laquelle l'agent réfrigérant peut s'introduire lorsque son volume augmente lors du passage en phase solide.

Selon encore une autre caractéristique de l'invention, la poignée comporte une cavité de dosage de la quantité de sel à insérer dans la cavité du corps creux.

Selon encore une autre caractéristique de l'invention, la poignée est vissée sur le corps creux.

Selon encore une autre caractéristique de l'invention, les parois du corps creux présentent, en section transversale, une forme ondulée.

Selon encore une autre caractéristique de l'invention, la base de la poignée comporte une extension dont les bords viennent reposer en bordure de l'ouverture du couvercle.

L'invention concerne également un bâton mélangeur destiné à être introduit dans un récipient de travail d'un appareil électroménager de préparation culinaire de type blender, caractérisé en ce que le bâton mélangeur comporte une cavité susceptible de contenir un agent caloporteur, la cavité comportant un orifice permettant le remplissage ou le vidage de la cavité.

L'invention concerne également un procédé pour réaliser des préparations culinaires dans un appareil blender comportant un récipient fermé par un couvercle, caractérisé en ce que l'on introduit, par une ouverture du couvercle, un bâton mélangeur préalablement placé dans un congélateur ou dans un four, le bâton mélangeur renfermant un agent caloporteur restituant du froid ou du chaud à la préparation contenue dans le récipient.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue générale en perspective d'un appareil blender comportant un récipient comprenant un couvercle muni d'un bâton mélangeur selon un mode particulier de réalisation de l'invention ;
- la figure 2 est une vue en perspective du bâton mélangeur de la figure 1 représenté seul ;
- la figure 3 est une vue en perspective éclatée du bâton mélangeur de la figure 2 ;
- la figure 4 est une vue de côté du bâton mélangeur de la figure 2;
- la figure 5 est une vue en coupe longitudinale du bâton mélangeur de la figure 4 ;
- la figure 6 est une vue en coupe transversale, suivant la ligne VI-VI, du bâton mélangeur de la figure 4,
- les figures 7 et 8 représentent respectivement une vue en perspective et une vue en coupe longitudinale d'un bâton mélangeur selon un second mode de réalisation de l'invention.

Seuls les éléments nécessaires à la compréhension de l'invention ont été représentés. Pour faciliter la lecture des dessins les mêmes éléments portent les mêmes références d'une figure à l'autre.

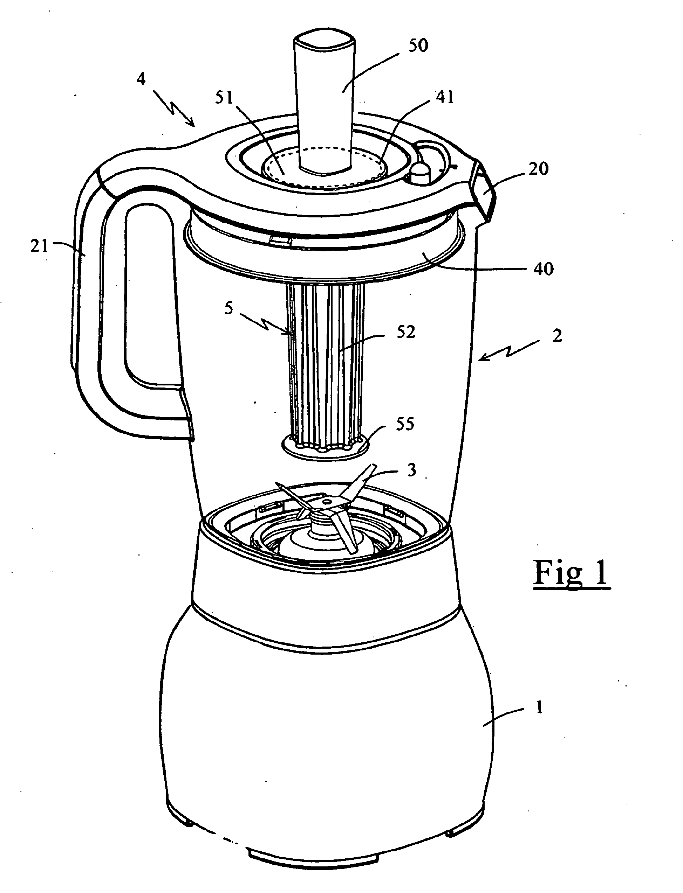

La figure 1 représente un appareil électroménager de préparation culinaire, de type blender, comportant un boîtier 1 servant de socle à un récipient 2 apte à contenir des aliments liquides ou solides, le boîtier 1 comportant classiquement un moteur, non représenté sur les figures, entraînant un outil de coupe rotatif 3 disposé dans le fond du récipient 2.

Le récipient 2 comporte un bec verseur 20 et une poignée 21 disposée à l'opposé de ce bec verseur 20, le récipient 2 étant fermé par un couvercle 4 amovible.

Le couvercle 4 comporte un corps sensiblement cylindrique reposant sur le bord supérieur du récipient 2 et présente une jupe 40 venant s'insérer dans la partie supérieure du récipient 2.

Afin d'éviter que les aliments ne restent collés contre les parois du récipient lors du mixage de préparations faiblement liquides, le couvercle 4 comporte une ouverture centrale 41, représentée en pointillé sur la figure 1, recevant un bâton mélangeur 5 permettant de ramener les aliments vers l'outil de coupe 3.

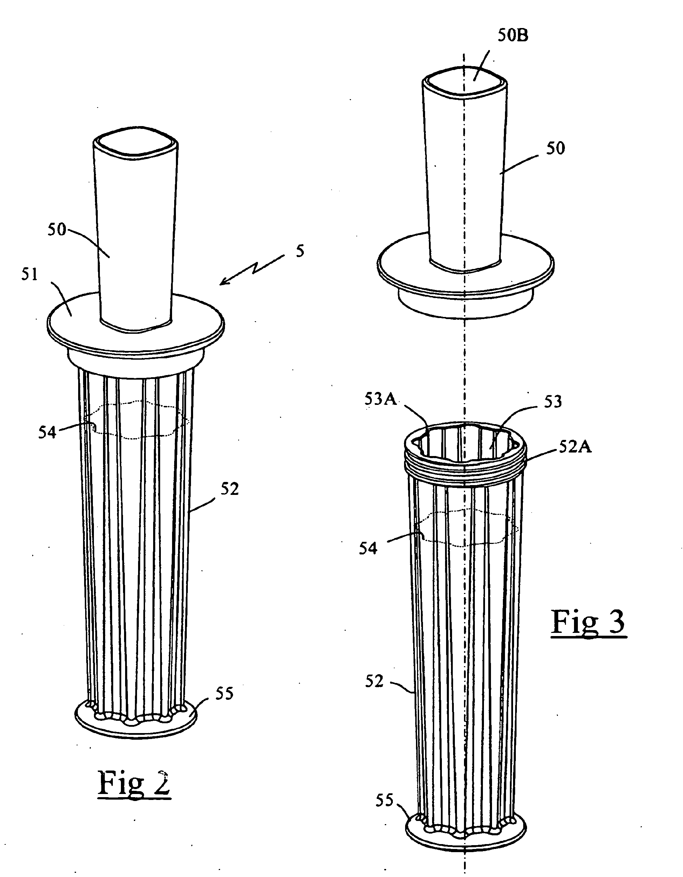

Conformément aux figures 2 à 5, la partie supérieure du bâton mélangeur 5 comporte une poignée 50 qui est délimitée à son extrémité inférieure par une garde 51 dont les bords viennent en appui sur les bords de l'ouverture 41, en autorisant un mouvement de basculement du bâton mélangeur sur le couvercle 4.

Plus particulièrement selon l'invention, le bâton mélangeur 5 comporte, sous la garde 51, un corps creux 52 définissant une cavité 53 pouvant recevoir un agent caloporteur 54, dont la surface supérieure est représentée en pointillée sur les figure 2 et 3, le corps creux 52 étant fixé de manière amovible à la poignée 50 et comportant une extrémité supérieure ouverte définissant un orifice 53A d'accès à la cavité.

De manière avantageuse, le corps creux 52 est fixé à la poignée 50 par un filetage 52A, formé à la périphérie de l'extrémité supérieure du corps creux 52, venant s'engager dans un manchon fileté 50A s'étendant sous la garde 51 de la poignée.

La longueur du corps creux 52 est avantageusement adaptée pour que l'extrémité inférieure de ce dernier, fermée par un déflecteur 55, vienne à proximité du sommet de l'outil de coupe 3 lorsque le couvercle 4 est en place sur le récipient 2 et que la garde 51 du bâton mélangeur 5 repose sur les bords de l'ouverture 41.

L'agent caloporteur 54 qui est introduit dans la cavité 53 est de préférence liquide et peut par exemple être un agent réfrigérant constitué d'un mélange d'eau et de sel, dans des proportions de l'ordre de 22% de sel en masse, un tel mélange présentant l'avantage d'être non toxique.

Il est préférentiellement prévu un marquage sur le corps creux 52, à hauteur des pointillés représentés sur les figures 2 et 3, afin d'indiquer le niveau maximum d'agent réfrigérant devant être introduit dans le corps creux 52 pour éviter tout risque de débordement ou de détérioration du bâton mélangeur 5 lors de l'expansion accompagnant la solidification de l'agent réfrigérant.

De manière avantageuse, la poignée 50 comporte une extrémité supérieure ouverte 50B donnant accès à une cavité de dosage 56 dont le volume correspond à la quantité de sel qu'il faut verser dans la cavité 53 pour obtenir un mélange d'eau et de sel dans des proportions adéquates lorsque la cavité 53 est remplie d'eau jusqu'au niveau maximum autorisé.

Un tel bâton mélangeur 5, rempli de son agent réfrigérant, peut ainsi être disposé pendant plusieurs heures dans un congélateur à une température ambiante inférieure à -20°C de manière à refroidir et/ou congeler l'agent réfrigérant présent dans la cavité 53. Le bâton mélangeur 5 peut ensuite être utilisé simplement pour réaliser des préparations glacées en l'introduisant par l'ouverture 41 du couvercle de sorte que le corps creux 52 contenant l'agent réfrigérant plonge dans la préparation à refroidir.

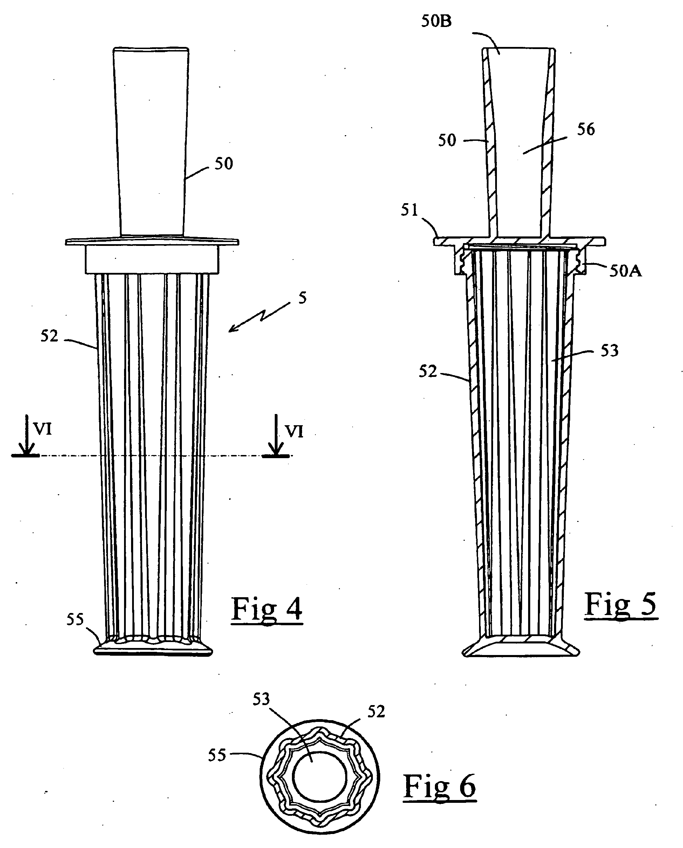

Conformément à la figure 6, le corps creux 52 présente préférentiellement des parois ondulées assurant une grande surface d'échange de manière à augmenter l'échange thermique entre l'agent réfrigérant et la préparation dans laquelle le bâton mélangeur est plongé.

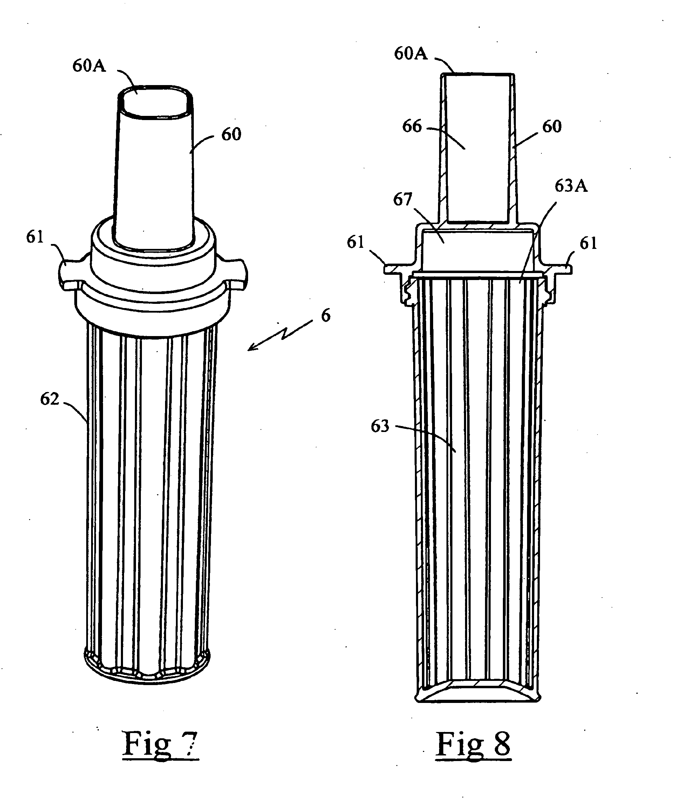

Les figures 7 et 8 présentent un second mode de réalisation d'un bâton mélangeur 6 selon l'invention.

Dans cette variante, le bâton mélangeur 6 comporte une poignée 60 amovible qui est vissée sur un corps creux 62, à paroi ondulée, comprenant une cavité 63 munie d'une ouverture 63A pouvant recevoir un agent caloporteur.

L'extrémité inférieure de la poignée 60 comporte deux oreilles 61 adaptées pour venir en appui contre le bord de l'ouverture 41 du couvercle 4 représenté à la figure 1.

Dans ce mode de réalisation avantageux, la poignée 60 comporte également une enceinte définissant un volume libre 67 venant au dessus de la cavité 63, ce volume libre 67 permettant à l'expansion de l'agent caloporteur lors du passage en phase solide.

Il n'y a ainsi aucun risque de détérioration du bâton mélangeur 6 si l'utilisateur remplit la cavité 63 à ras bord avec un agent réfrigérant, tel qu'un mélange d'eau et de sel, puis place le bâton mélangeur 6 dans un congélateur pour obtenir la solidification de l'agent réfrigérant.

Dans cette variante de réalisation, la poignée comporte également une extrémité supérieure ouverte 60A donnant accès à une cavité de dosage 66 dont le volume correspond à la masse de sel qu'il faut introduire dans la cavité 63 pour obtenir un mélange adéquat d'eau et de sel lorsque la cavité 63 est remplie à ras bord.

De tels bâtons mélangeurs seront avantageusement réalisés en matériau plastique injectable. Dans une variante, seule la poignée du bâton mélangeur sera réalisée en matériau plastique et le corps creux du bâton mélangeur sera avantageusement réalisé en métal de manière à favoriser l'échange thermique.

Les bâtons mélangeurs ainsi réalisés présentent l'avantage d'être peu encombrants, ce qui permet de les introduire sans difficulté dans un congélateur ou dans un four. On obtient ainsi un bâton mélangeur, contenant un agent caloporteur qui peut être préalablement chauffé ou refroidi par exemple en le disposant respectivement dans un four à micro-ondes ou dans un congélateur et qui peut être ensuite introduit dans le récipient pour chauffer ou refroidir, ou maintenir à haute ou basse température, les différents aliments présents dans le récipient, par exemple pour réaliser des soupes ou des préparations glacées telles que des milk-shakes.

Bien entendu, l'invention n'est nullement limitée aux modes de réalisation décrits et illustrés qui n'ont été donnés qu'à titres d'exemples. Des modifications restent possibles, notamment du point de vue de la constitution des divers éléments ou par substitution d'équivalents techniques, sans sortir pour autant du domaine de protection de l'invention.

Ainsi dans une variante de réalisation, le corps creux pourra être solidaire de la poignée, la poignée présentant alors un orifice communiquant avec la cavité du corps creux pour former une sorte d'entonnoir de remplissage de la cavité. Cet orifice ne sera pas nécessairement fermé par un bouchon, le bâton mélangeur pouvant être posé verticalement ou comporter des chicanes évitant le déversement de liquide lorsque le bâton mélangeur est placé dans une position horizontale.

## Revendications

1. Appareil électroménager de préparation culinaire de type blender comportant un récipient (2) dont le fond comprend un outil de travail (3) entraîné en rotation par un moteur, ledit récipient (2) étant fermé par un couvercle (4) comportant une ouverture (41) recevant un bâton mélangeur (5), **caractérisé en ce que** la partie du bâton mélangeur (5, 6) introduite dans le récipient (2) comporte une cavité (53, 63) susceptible de contenir un agent caloporteur.

2. Appareil électroménager selon la revendication 1, **caractérisé en ce que** la cavité (53, 63) comporte un orifice (53A, 63A) permettant le remplissage ou le vidage de ladite cavité (53, 63).

3. Appareil électroménager selon la revendication 2, **caractérisé en ce que** ledit orifice (53A, 63A) est fermé par un élément amovible (50, 60).

4. Appareil électroménager selon l'une quelconque des revendications 1 à 3, **caractérisé en ce que** ledit agent caloporteur est un liquide réfrigérant qui est congelé en disposant le bâton mélangeur (5, 6) dans un congélateur, le bâton mélangeur (5, 6) étant ensuite introduit dans le récipient (2) pour refroidir, par conduction thermique, la préparation contenue dans le récipient (2).

5. Appareil électroménager selon l'une quelconque des revendications 1 à 4, **caractérisé en ce que** ledit agent caloporteur est un agent réfrigérant constitué par un mélange d'eau et de sel.

6. Appareil électroménager selon l'une quelconque des revendications 1 à 5, **caractérisé en ce que** le bâton mélangeur (5, 6) comporte une extrémité supérieure munie d'une poignée (50, 60) montée de manière amovible sur un corps creux (52, 62) allongé renfermant ladite cavité (53, 63) et **en ce que** le corps creux (52, 62) comporte une extrémité supérieure ouverte, définissant ledit orifice de remplissage (53A, 63A), qui est fermée par ladite poignée (50, 60).

7. Appareil électroménager selon la revendication 6, **caractérisé en ce que** ladite poignée (60) comporte un volume libre (67) venant au-dessus de l'orifice de remplissage (63A) de la cavité (63).

8. Appareil électroménager selon l'une quelconque des revendications 6 à 7, **caractérisé en ce que** ladite poignée (50, 60) comporte une cavité de dosage (56, 66) de la quantité de sel à insérer dans la cavité (53, 63) du corps creux.

9. Appareil électroménager selon l'une quelconque des revendications 6 à 8, **caractérisé en ce que** ladite poignée (50, 60) est vissée sur ledit corps creux (52, 62).

10. Appareil électroménager selon l'une quelconque des revendications 6 à 9, **caractérisé en ce que** les parois dudit corps creux (52, 62) présentent, en section transversale, une forme ondulée.

11. Appareil électroménager selon l'une quelconque des revendications 6 à 10, **caractérisé en ce que** la base de la poignée (50, 60) comporte une extension (51, 61) dont les bords viennent reposer en bordure de l'ouverture (41) du couvercle.

12. Bâton mélangeur (5, 6) destiné à être introduit au travers d'une ouverture d'un couvercle de récipient de travail (2) d'un appareil électroménager de préparation culinaire de type blender, le bâton mélangeur (5, 6) comportant une poignée (50, 60) surmontant une garde (51) dont les bords sont destinés à venir reposer en bordure de l'ouverture (41) et une partie, disposée sous la garde (51), destinée à être introduite dans le récipient de travail (2), **caractérisé en ce que** ladite partie comporte un corps creux (52, 62) comprenant une cavité (53, 63) susceptible de contenir un agent caloporteur et **en ce que** la cavité (53, 63) comporte un orifice (53A, 63A) permettant le remplissage ou le vidage de ladite cavité (53, 63).

13. Bâton mélangeur (5, 6) selon la revendication 12, **caractérisé en ce que** ledit orifice (53A, 63A) est fermé par un élément amovible (50, 60).

14. Bâton mélangeur (5, 6) selon l'une quelconque des revendications 12 à 13, **caractérisé en ce que** ledit agent caloporteur est un agent réfrigérant constitué par un mélange d'eau et de sel.

15. Bâton mélangeur (5, 6) selon l'une quelconque des revendications 12 à 14, **caractérisé en ce que** la poignée (50, 60) est montée de manière amovible sur le corps creux (52, 62) renfermant ladite cavité (53, 63), le corps creux (52, 62) comportant une extrémité supérieure ouverte, définissant ledit orifice de remplissage (53A, 63A), fermée par ladite poignée (50, 60).

16. Bâton mélangeur (5, 6) selon la revendication 15, **caractérisé en ce que** les parois dudit corps creux (52, 62) présentent, en section transversale, une forme ondulée.

17. Bâton mélangeur (5, 6) selon l'une quelconque des revendications 15 à 16, **caractérisé en ce que** ladite poignée (60) comporte un volume libre (67) venant au dessus de l'orifice de remplissage (63A) de la cavité (63).

18. Bâton mélangeur (5, 6) selon l'une quelconque des revendications 12 à 17, **caractérisé en ce que** ladite poignée (50, 60) comporte une cavité de dosage (56, 66) de la quantité de sel à insérer dans la cavité (53, 63) du corps creux.

## Claims

1. A household electrical appliance for preparing food, the appliance being of the blender type and including a receptacle (2) having a bottom provided with a work tool (3) driven in rotation by a motor, said receptacle (2) being closed by a lid (4) provided with an opening (41) receiving a mixer stick (5), said household electrical appliance being **characterized in that** the portion of the mixer stick (5, 6) that is inserted into the receptacle (2) is provided with a cavity (53, 63) suitable for containing a heat transfer medium.

2. A household electrical appliance according to claim 1, **characterized in that** said cavity (53, 63) is provided with an orifice (53A, 63A) making it possible to fill or to empty said cavity (53, 63).

3. A household electrical appliance according to claim 2, **characterized in that** said orifice (53A, 63A) is closed by a removable element (50, 60).

4. A household electrical appliance according to any one of claims 1 to 3, **characterized in that** said heat transfer medium is a coolant liquid that is frozen by placing the mixer stick (5, 6) in a deep freeze, the mixer stick (5, 6) then being inserted into the receptacle (2) so as to act by heat conduction to cool the preparation contained in the receptacle (2).

5. A household electrical appliance according to any one of claims 1 to 4, **characterized in that** said heat transfer medium is a coolant medium constituted by a mixture of water and of salt.

6. A household electrical appliance according to any one of claims 1 to 5, **characterized in that** the mixer stick (5, 6) has a top end provided with a handle (50, 60) mounted removably on an elongate hollow body (52, 62) enclosing said cavity (53, 63), and **in that** the hollow body (52, 62) has an open top end that defines said filling orifice (53A, 63A) and that is closed by said handle (50, 60).

7. A household electrical appliance according to claim 6, **characterized in that** said handle (60) is provided with an empty volume (67) that comes above the filling orifice (63A) of the cavity (63).

8. A household electrical appliance according to claim 6 or claim 7, **characterized in that** said handle (50, 60) is provided with a metering cavity (56, 66) for metering out the quantity of salt to be inserted into the cavity (53, 63) in the hollow body.

9. A household electrical appliance according to any one of claims 6 to 8, **characterized in that** said handle (50, 60) is screwed onto said hollow body (52, 62).

10. A household electrical appliance according to any one of claims 6 to 9, **characterized in that,** in cross-section, the walls of said hollow body (52, 62) are of an undulating shape.

11. A household electrical appliance according to any one of claims 6 to 10, **characterized in that** the base of the handle (50, 60) is provided with an extension (51, 61) whose edges come to rest on the edge of the opening (41) in the lid.

12. A mixer stick (5, 6) designed to be inserted through an opening in a lid of a work receptacle (2) of a household electrical appliance for preparing food, which appliance is of the blender type, the mixer stick (5, 6) having a handle (50, 60) overlying a guard (51) whose edges are designed to come to rest on the edge of the opening (41), and a portion disposed under the guard (51) and designed to be inserted into the work receptacle (2), said mixer stick being **characterized in that** said portion comprises a hollow body (52, 62) provided with a cavity (53, 63) suitable for containing a heat transfer medium, and **in that** the cavity (53, 63) is provided with an orifice (53A, 63A) making it possible to fill or to empty said cavity (53, 63).

13. A mixer stick (5, 6) according to claim 12, **characterized in that** said orifice (53A, 63A) is closed by a removable element (50, 60).

14. A mixer stick (5, 6) according to claim 12 or claim 13, **characterized in that** said heat transfer medium is a coolant medium constituted by a mixture of water and of salt.

15. A mixer stick (5, 6) according to any one of claims 12 to 14, **characterized in that** the handle (50, 60) is mounted removably on the hollow body (52, 62) enclosing said cavity (53, 63), the hollow body (52, 62) having an open top end that defines said filling orifice (53A, 63A) and that is closed by said handle (50, 60).

16. A mixer stick (5, 6) according to claim 15, **characterized in that**, in cross-section, the walls of said hollow body (52, 62) are of an undulating shape.

17. A mixer stick (5, 6) according to claim 15 or claim 16, **characterized in that** said handle (60) is provided with an empty volume (67) that comes above the filling orifice (63A) of the cavity (63).

18. A mixer stick (5, 6) according to any one of claims 12 to 17, **characterized in that** said handle (50, 60) is provided with a metering cavity (56, 66) for metering out the quantity of salt to be inserted into the cavity (53, 63) in the hollow body.

## Patentansprüche

1. Elektrohaushaltsgerät zur Nahrungszubereitung vom Typ Mixer, mit einem Behälter (2), dessen Boden ein Arbeitswerkzeug (3) aufweist, das von einem Motor in Drehung versetzt ist, wobei der Behälter (2) durch einen Deckel (4) geschlossen ist, der einen Durchbruch (41) aufweist, der einen Mixstab (5) aufnimmt, **dadurch gekennzeichnet, dass** der Teil des Mixstabs (5, 6), der in den Behälter (2) eingeführt wird, einen Hohlraum (53, 63) aufweist, der ein Kühlmittel enthalten kann.

2. Elektrohaushaltsgerät nach Anspruch 1, **dadurch gekennzeichnet, dass** der Hohlraum (53, 63) eine Öffnung (53A, 63A) aufweist, das das Auffüllen oder das Entleeren des Hohlraums (53, 63) ermöglicht.

3. Elektrohaushaltsgerät nach Anspruch 2, **dadurch gekennzeichnet, dass** die Öffnung (53A, 63A) durch ein abnehmbares Element (50, 60) geschlossen ist.

4. Elektrohaushaltsgerät nach einem der Ansprüche 1 bis 3, **dadurch gekennzeichnet, dass** das Kühlmittel eine Kühlflüssigkeit ist, die **dadurch** tiefgekühlt wird, dass der Mixstab (5, 6) in einen Gefrierapparat eingeführt wird, wobei der Mixstab (5, 6) anschließend in den Behälter (2) eingesetzt wird, um die im Behälter (2) enthaltene Zubereitung durch Wärmeleitung zu kühlen.

5. Elektrohaushaltsgerät nach einem der Ansprüche 1 bis 4, **dadurch gekennzeichnet, dass** das Kühlmittel eine Gefriermischung ist, die aus einer Mischung aus Wasser und Salz besteht.

6. Elektrohaushaltsgerät nach einem der Ansprüche 1 bis 5, **dadurch gekennzeichnet, dass** der Mixstab (5, 6) ein oberes Ende aufweist, das mit einem Griff (50, 60) versehen ist, der abnehmbar an einem länglichen Hohlkörper (52, 62) angebracht ist, der den Hohlraum (53, 63) einschließt, und dass der Hohlkörper (52, 62) ein offenes oberes Ende aufweist, das die Einfüllöffnung (53A, 63A) definiert und durch den Griff (50, 60) geschlossen ist.

7. Elektrohaushaltsgerät nach Anspruch 6, **dadurch gekennzeichnet, dass** der Griff (60) ein freies Volumen (67) aufweist, das über der Einfüllöffnung (63A) des Hohlraums (63) steht.

8. Elektrohaushaltsgerät nach einem der Ansprüche 6 bis 7, **dadurch gekennzeichnet, dass** der Griff (50, 60) einen Hohlraum (56, 66) zum Dosieren der Salzmenge, die in den Hohlraum (53, 63) des Hohlkörpers eingebracht werden soll, umfasst.

9. Elektrohaushaltsgerät nach einem der Ansprüche 6 bis 8, **dadurch gekennzeichnet, dass** der Griff (50, 60) auf den Hohlkörper (52, 62) aufgeschraubt wird.

10. Elektrohaushaltsgerät nach einem der Ansprüche 6 bis 9, **dadurch gekennzeichnet, dass** die Wände des Hohlkörpers (52, 62) im Querschnitt eine gewellte Form aufweisen.

11. Elektrohaushaltsgerät nach einem der Ansprüche 6 bis 10, **dadurch gekennzeichnet, dass** die Basis des Griffs (50, 60) einen Ansatz (51, 61) aufweist, dessen Ränder am Rand des Durchbruchs (41) des Deckels anliegen.

12. Mixstab (5, 6), der dazu bestimmt ist, durch einen Durchbruch eines Deckels eines Arbeitsbehälters (2) eines Elektrohaushaltsgeräts zur Nahrungszubereitung vom Typ Mixer eingeführt zu werden, wobei der Mixstab (5, 6) einen Griff (50, 60) aufweist, der einen Schutzansatz (51), dessen Ränder dazu bestimmt sind, am Rand des Durchbruchs (41) aufzuliegen, und einen Teil überragt, der unter dem Schutzansatz (51) angeordnet ist und dazu bestimmt ist, in den Arbeitsbehälter (2) eingeführt zu werden, **dadurch gekennzeichnet, dass** der Teil einen Hohlkörper (52, 62) umfasst, der einen Hohlraum (53, 63) aufweist, der ein Kühlmittel enthalten kann, und dass der Hohlraum (53, 63) eine Öffnung (53A, 63A) umfasst, die das Auffüllen oder das Entleeren des Hohlraums (53, 63) ermöglicht.

13. Mixstab (5, 6) nach Anspruch 12, **dadurch gekennzeichnet, dass** die Öffnung (53A, 63A) durch ein abnehmbares Element (50, 60) geschlossen ist.

14. Mixstab (5, 6) nach einem der Ansprüche 12 bis 13, **dadurch gekennzeichnet, dass** das Kühlmittel eine Gefriermischung ist, die aus einer Mischung aus Wasser und Salz besteht.

15. Mixstab (5, 6) nach einem der Ansprüche 12 bis 14, **dadurch gekennzeichnet, dass** der Griff (50, 60) abnehmbar am Hohlkörper (52, 62) angebracht ist, der den Hohlraum (53, 63) einschließt, wobei der Hohlkörper (52, 62) ein offenes oberes Ende aufweist, das die Einfüllöffnung (53A, 63A) definiert, die durch den Griff (50, 60) geschlossen ist.

16. Mixstab (5, 6) nach Anspruch 15, **dadurch gekennzeichnet, dass** die Wände des Hohlkörpers (52, 62) im Querschnitt eine gewellte Form aufweisen.

17. Mixstab (5, 6) nach einem der Ansprüche 15 bis 16, **dadurch gekennzeichnet, dass** der Griff (60) ein freies Volumen (67) aufweist, das sich über der Einfüllöffnung (63A) des Hohlraums (63) befindet.

18. Mixstab (5, 6) nach einem der Ansprüche 12 bis 17, **dadurch gekennzeichnet, dass** der Griff (50, 60) einen Hohlraum zum Dosieren der Salzmenge, die in den Hohlraum (53, 63) des Hohlkörpers eingebracht werden soll, umfasst.
